# EUROPEAN PATENT APPLICATION

(11) **EP 4 254 366 A1**
(43) Date of publication of application: **04.10.2023**
(21) Application number: 22164873.6
(22) Date of filing: 28.03.2022
(51) Int. Cl.: G07C 9/00, B60R 25/31, B60R 25/20

(54) **METHOD AND SYSTEM FOR CONTROLLING NOTIFICATION OF VEHICLE STATUS TO A USER**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JOHANSSON, Jonathan, 41714 GÖTEBORG (SE); GHATUARI, Sakti Ranjan, 41721 GÖTEBORG (SE)
(74) Representative: Zacco Sweden AB

(57) **Abstract**

A method for controlling notification of a status of a vehicle to a user, comprising: determining whether the user is inside the vehicle; and if the user is not inside the vehicle, determining whether the user is within a predetermined threshold distance from the vehicle; wherein if the user is within the predetermined threshold distance of the vehicle, de-activating a notification of the status of the vehicle to the user; and if the user is not within the predetermined threshold distance of the vehicle, activating a notification of the status of the vehicle to the user.

## Description

### Field of the Invention

The present invention relates to a method and system for controlling notification of vehicle status to a user.

### Background of the Invention

Intelligent or smart vehicles of today are arranged to communicate with users to provide vehicle information. For instance, users can receive notifications containing updated vehicle information including driving data (range, distance travelled, fuel economy, etc.), vehicle status (locked/unlocked, doors/windows closed/open, lights on/off, heating on/off, charging on/off, etc.), position. The information can be useful in deciding whether any action is required or desired by the user.

However, in certain situations, such notifications can be unnecessary or disturbing if the owner is aware of the vehicle status or has not requested the information. For example, when the user has left the car unlocked on purpose, e.g., when standing near the vehicle. Repeated notifications in such situations can be experienced as a nuisance, and the vehicle appears to be "stupid".

Hence, there is a need to provide improved methods and systems for controlling notifications of vehicle status to a user.

### Summary of the Invention

An objective of the present disclosure is to provide a smart method and system which blocks unnecessary and redundant notifications of vehicle status.

This objective is achieved in a first aspect by a method for controlling notification of a status of a vehicle to a user, comprising: determining whether the user is inside the vehicle; and if the user is not inside the vehicle, determining whether the user is within a predetermined threshold distance from the vehicle; wherein if the user is within the predetermined threshold distance of the vehicle, de-activating a notification of the status of the vehicle to the user; and if the user is not within the predetermined threshold distance of the vehicle, activating a notification of the status of the vehicle to the user.

By identifying situations in which the user does not need or want vehicle status notifications, based on the proximity of the user to the vehicle, it is possible to control whether a notification should be sent or not.

In one embodiment, the method further comprises: if the user is not inside the vehicle, capturing at least one image of an environment surrounding the vehicle; determining a presence of the user in the at least one image; wherein if the user is present in the at least one image; de-activating a notification of the status of the vehicle to the user; and if the user is not present in the at least one image; activating a notification of the status of the vehicle to the user. By capturing an image of the vehicle surroundings, it is possible to further identify situations in which the user is within sight of the vehicle, i.e., the user is both sufficiently close and has a clear line of sight to the vehicle as an additional condition for de-activating vehicle status notification.

In one embodiment, the method further comprises: if the user is present in the at least one image, determining whether the user faces towards the vehicle within a predetermined time period; and if the user faces towards the vehicle within a predetermined time period; de-activating a notification of the status of the vehicle to the user; if the user does not face towards the vehicle within a predetermined time period; activating a notification of the status of the vehicle to the user. By checking whether the user faces towards the vehicle, it is possible to further identify situations in which the vehicle not only is in the vicinity of and visible to the user, but also that the user is in position to actually see the vehicle an observe any activity near the vehicle. This provides an additional condition for de-activating vehicle status notification.

In one embodiment, determining the presence of the user in the at least one image and/or if the user faces towards the vehicle is performed using facial recognition. Facial recognition provides a simple and effective way of determining whether the user faces towards the vehicle.

In one embodiment, determining the presence of the user in the at least one image is performed by correlating a position of a person in the at least one image with a position of a key associated with the vehicle. In situations in which more than one person is present in the captured image, it is possible to determine which one is the user of the vehicle by correlating the position of the key with the positions of the persons in the image.

In one embodiment, the at least one image is captured using at least one imaging device arranged in the vehicle. Vehicle-mounted imaging devices provide images from a known point of view in a well-defined coordinate system, facilitating determining the distance to and/or position of persons in the captured images.

In one embodiment, determining whether the user is inside the vehicle is performed by means of a pressure sensor arranged in at least one seat of the vehicle, at least one interior imaging device in the vehicle, and/or at least one sensor or antenna arranged in the vehicle and configured to detect presence of a key associated with the vehicle and/or whether a vehicle door has been opened. Thus, several ways of determining whether the user is still in the vehicle are provided, which determine if the next step of the method should be triggered or not, thereby saving unnecessary data collection and processing.

In one embodiment, determining whether the user is within a threshold distance from the vehicle comprises measuring a distance between the vehicle and a key associated with the vehicle based on sensors/antennas arranged in the vehicle, determining a presence of the user in at least one image of the surroundings of the vehicle, wireless signal communication between the vehicle and the key associated with the vehicle and/or geopositioning of the vehicle and the key associated with the vehicle. Thus, several ways of determining whether the user is within a threshold distance from the vehicle are provided. Geopositioning may comprise using GNSS positioning, mobile device tracking and/or Wi-Fi positioning.

In one embodiment, the status of the vehicle comprises a door lock status, a lighting system status, and/or a heating system status. Any suitable information regarding the status of the vehicle which could be useful to the user in deciding whether any action is required or desired, may thus be notified to the user.

In one embodiment, the notification of the vehicle status to the user comprises sending a signal to at least one mobile device associated with the vehicle. The mobile device could be a vehicle key or any mobile device selected by the user capable of receiving and displaying the vehicle status notification, through wireless signal communication.

In a second aspect of the present disclosure, there is provided a system for controlling notification of a status of a vehicle to a user, comprising: processing circuitry; and a memory, wherein said memory contains instructions executable by said processing circuitry; wherein the system is arranged to communicate with at least one sensor, antennas and/or imaging devices in the vehicle to receive data; wherein the system is configured to carry out the method according to the first aspect.

In a third aspect, there is provided a vehicle comprising a system according to the second aspect.

In a fourth aspect, there is provided a computer program comprising instructions which, when the program is executed by a computer, cause the computer to carry out the method according to the first aspect.

In a fifth aspect, there is provided a computer-readable data carrier having stored thereon the computer program according to the fourth aspect.

Further features and advantages of the present disclosure will become apparent when studying the appended claims and the following description. The person skilled in the art realizes that different features of the present disclosure may be combined to create embodiments other than those described hereinabove, without departing from the scope of the present disclosure.

### Brief Description of the Drawings

With reference to the appended drawings, below follows a more detailed description of example embodiments of the invention, wherein:
Fig. 1 is an illustration of a vehicle and a user in different locations in relation to the vehicle, representing different scenarios according to the present disclosure.
Fig. 2 is a flowchart illustrating a method for controlling notification of a status of a vehicle to a user according to the present disclosure.
Fig. 3 is a schematic illustration of a system for controlling notification of a status of a vehicle to a user according to the present disclosure.

### Detailed Description of Example Embodiments

In the following, a detailed description of a method and system for controlling notification of a status of a vehicle to a user according to the present disclosure is presented. In the drawing figures, like reference numerals designate identical or corresponding elements throughout the several figures. It will be appreciated that these figures are for illustration only and do not in any way restrict the scope of the present disclosure.

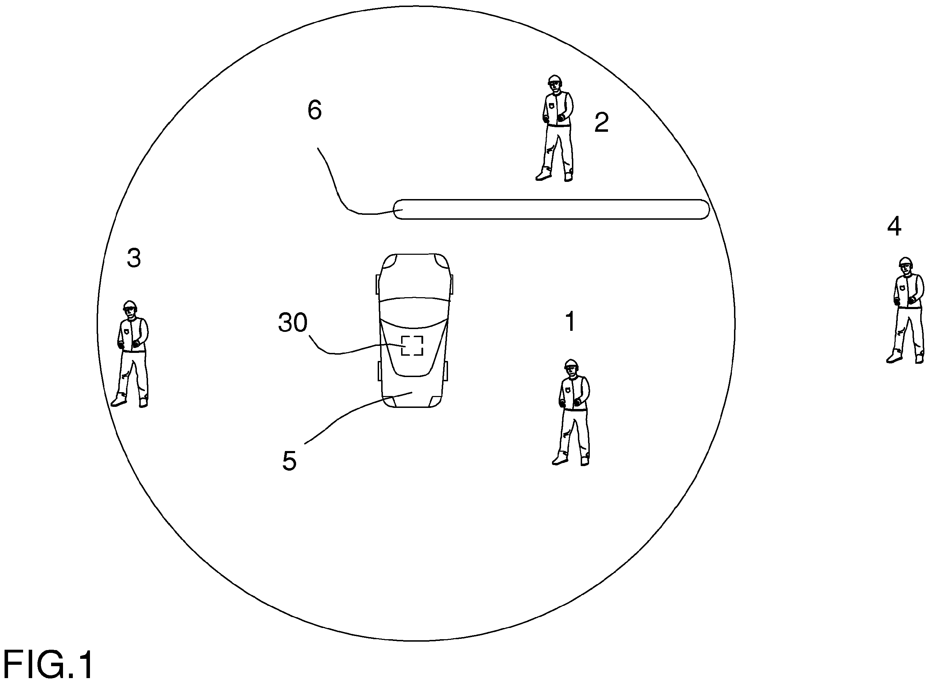

Referring now to Fig. 1, there is shown a schematic illustration of a vehicle 5 and a user in different locations 1-4 around the vehicle 5. The different locations 1-4 represent different scenarios relevant for deciding whether a notification of a vehicle status should be sent to the user, e.g. by means of wireless signal communication to a mobile device (e.g., smart phone) which is associated with the vehicle 5. The vehicle may comprise an imaging device 30 arranged to capture images of the surroundings of the vehicle. Further devices suitable for carrying out the method may be arranged in the vehicle such as sensors, antennas and additional imaging devices, as will be discussed in more detail below.

In location 1, the user is situated a few meters away from the vehicle 5, but within a predetermined threshold distance represented by a circle centred on the vehicle 5. The user is in a line of sight from the vehicle 5, i.e., there are no obstacles between the user and the vehicle 5 blocking the view. This represents a first scenario in which the user is considered to have full overview of the vehicle 5 and able to observe any suspicious activity, i.e., someone trying to steal something from inside the vehicle 5. In such a situation, the user would not need or want a notification of the vehicle 5 status, e.g., that the vehicle 5 is unlocked or that the lights or heating are turned on.

In location 2, the user is situated a bit further away from the vehicle 5 than in location 1, but still within the circle representing the predetermined threshold distance. However, unlike in location 1, there is an obstacle between the user and the vehicle 5, here shown as a fence 6. This represents a second scenario in which the user, although being close to the vehicle 5 but out of sight, is not considered to have full overview of the vehicle 5. In such a situation, the user would therefore want to receive a vehicle status notification and be able to react upon learning that the vehicle 5 is unlocked or that the lights or heating are turned on.

In location 3, similar to location 1, the user is situated a few meters away from the vehicle 5 and in line of sight. However, the user is facing away from the vehicle 5 such that his/her attention is not focused on the vehicle 5. This represents a third scenario in which the user, although being close to the vehicle 5 and in sight, is not considered to have full overview of the vehicle 5. In such a situation, the user would therefore want to receive a vehicle status notification and be able to react upon learning that the vehicle 5 is unlocked or that the lights or heating are turned on.

In location 4, the user is situated far away from the vehicle 5, outside the circle representing the predetermined threshold distance. This represents a fourth scenario in which the user is considered to have no overview of the vehicle 5. In such a situation, the user would therefore want to receive a vehicle status notification and be able to react upon learning that the vehicle 5 is unlocked or that the lights or heating are turned on.

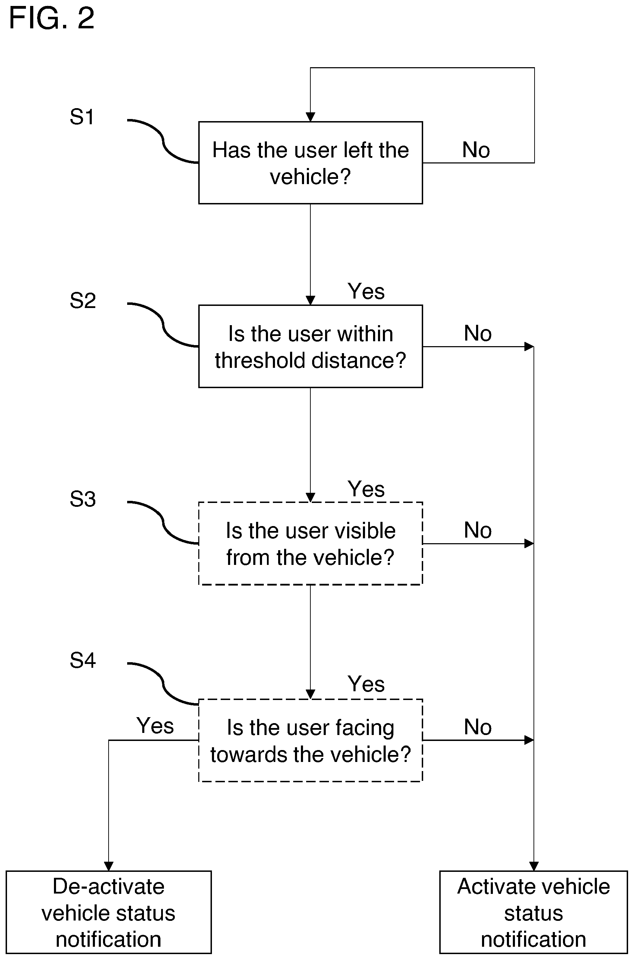

Referring now to Fig. 2, there is shown a flowchart illustrating the steps of the method according to the present disclosure. The method aims at identifying the four scenarios described above in relation to Fig. 1 and controlling vehicle status notification to the user accordingly. In a first step S1, it is determined whether the user is inside the vehicle 5 or has stepped outside. In the former case, there is no need to send out a notification of vehicle status since the user being inside the vehicle 5 is considered to be inherently aware of the vehicle 5 status.

The present disclosure encompasses several ways of determining whether the user is inside the vehicle 5. For instance, a pressure sensor may be arranged in one or more seats of the vehicle 5 to sense the weight of a person occupying the seat. A reading from the pressure sensor, advantageously arranged in the driver's seat, provides an indication that the user is still inside the vehicle 5. An imaging device arranged inside the vehicle 5 can be used to capture an image of the interior of the vehicle 5 and the presence of a person in the image can be detected. Another alternative is to use a sensor or antenna which detects the presence inside the vehicle 5 of a key associated with the vehicle 5 based on wireless signal communication. In one embodiment, the key is a mobile device such as a smart phone which has been associated or coupled with the vehicle 5 to replace or in addition to a vehicle key fob. Yet another alternative is to detect whether a vehicle door has been opened by means of suitable sensors. One or more of these alternatives may be combined to provide improved accuracy and/or redundance in determining whether the user is inside the vehicle 5 or has stepped outside.

In case the user is not inside the vehicle 5, the method proceeds to a second step S2, in which it is determined whether the user is within a predetermined threshold distance from the vehicle 5. It the user is within the predetermined threshold distance, corresponding to the first scenario outlined above, notification of a vehicle status to the user is de-activated. For instance, if the vehicle 5 is unlocked, there is no notification sent out since the user is considered to be aware of this and in position to observe any suspicious activity near the vehicle 5.

On the other hand, if the user is not within the predetermined threshold distance, corresponding to the fourth scenario outlined above, notification of a vehicle status to the user is activated. Thus, if the user forgot to lock the vehicle 5 or left the lights on, a notification of the vehicle 5 status is sent out, since the user is considered to be unaware of this and/or not in position to observe any suspicious activity near the vehicle 5.

Several ways of determining whether the user is within a threshold distance from the vehicle 5 may be used in conjunction with the method according to the present disclosure. In one embodiment, a distance between the vehicle 5 and a key associated with the vehicle 5 is measured based on sensors/antennas arranged in the vehicle 5. For instance, using wireless signal communication between the vehicle 5 and the key associated with the vehicle 5, the time taken for a wireless signal emanating from the key to reach the sensor/antenna is used to calculate the distance between them. As explained above, the key can be any suitable mobile device, such as a smart phone, which has been associated or coupled with the vehicle 5 to replace or in addition to the vehicle key fob. Another alternative is to use geopositioning of the vehicle 5 and the key associated with the vehicle 5, i.e., determining or estimating the geographic position of the vehicle 5 and the key, and thereby deduce the distance between them. Geopositioning may be performed using GNSS positioning, mobile device tracking, Wi-Fi positioning, etc. These methods are based on the assumption that the user carries the key such that the position of the user corresponds to the position of the key. Yet another alternative is determining a presence of the user in at least one image of the surroundings of the vehicle 5, as mentioned above. Image processing may be used to recognise and/or identify a person in the image. One or more of these alternatives may be combined to provide improved accuracy and/or redundance in determining whether the user is within a threshold distance from the vehicle 5.

In order to provide additional layers of security, the method may proceed to a third step S3, in which it is determined whether the user is visible from the vehicle 5, i.e., whether he/she has a clear line of sight to the vehicle 5. To this end, at least one image of an environment surrounding the vehicle 5 is captured and a presence of the user in the at least one image is determined. If the user is present in the at least one image, corresponding to the first scenario outlined above, notification of a vehicle status to the user is de-activated.

On the other hand, if the user is not present in the at least one image, corresponding to the second scenario outlined above, notification of a vehicle status to the user is activated. In such a situation, it can be deduced that the user does not have a line of sight to the vehicle 5. Thus, if the user forgot to lock the vehicle 5 or left the lights or heating on, a notification of the vehicle 5 status is sent out, since the user is considered to be unaware of this and/or not in position to observe any suspicious activity near the vehicle 5.

To account for additional conceivable situations when the user might need or want vehicle notification status, the method may proceed to a fourth step S4, which considers if the user is actually observing or looking at the vehicle 5. To this end, it is determined whether the user faces towards the vehicle 5 within a predetermined time period. If the user faces towards the vehicle 5 within the predetermined time period, notification of a vehicle status to the user is de-activated. The time period may range from a scale of seconds to minutes, and may be set by the user, depending on the user's preference.

On the other hand, if the user does not face towards the vehicle 5 within the predetermined time period, corresponding to the third scenario outlined above, notification of a vehicle status to the user is activated. Thus, if the vehicle 5 is unlocked and the user is not looking at the vehicle 5 during a period of e.g., 2 minutes, a notification of the vehicle 5 status is sent out, since the user is considered to be unaware of this and/or not in position to observe any suspicious activity near the vehicle 5.

Determining the presence of the user in the image and/or whether the user faces towards the vehicle 5 may be performed using facial recognition. A face may be recognised with or without further identification. In other words, to determine that the user faces towards the vehicle 5, it is sufficient to recognise a face without requiring the user to be identified. For improved accuracy in determining the presence of the user in the captured image of the surroundings, the facial image may be matched with a second facial image of the user, for instance a facial image stored in a database or a facial image extracted from an image captured inside the vehicle 5 in close temporal proximity to the first facial image. Another way of determining presence of the user in the image is to correlate a position of a person in the image with a position of the vehicle 5 key as described above. This may be helpful in situations where more than one person is present in the image. As mentioned above, the image may be captured using at least one imaging device arranged in the vehicle 5, such as an exterior camera for imaging the surroundings of the vehicle 5.

The vehicle 5 status comprises door lock status, lighting system status and/or heating system status. The means for notification comprises sending a signal to at least one mobile device, such as a smart phone, associated with the vehicle 5. The third and fourth steps may be optional, denoted by the hatched lines of the corresponding boxes in Fig. 2.

The different steps of the method may be repeated, for instance at regular intervals, to ensure that the decision whether to activate or de-activate notification of vehicle status is taken based on updated information about the position and viewing direction of the user in relation to the vehicle 5. During repetition, all the steps of the method are not necessarily performed again. For instance, if the user has stepped outside the vehicle 5, the first step S1 does not need to be performed again, unless the other steps indicate that the user has re-entered the vehicle 5. Similarly, if any of steps S2-S4 return a negative response, subsequent steps are considered unnecessary.

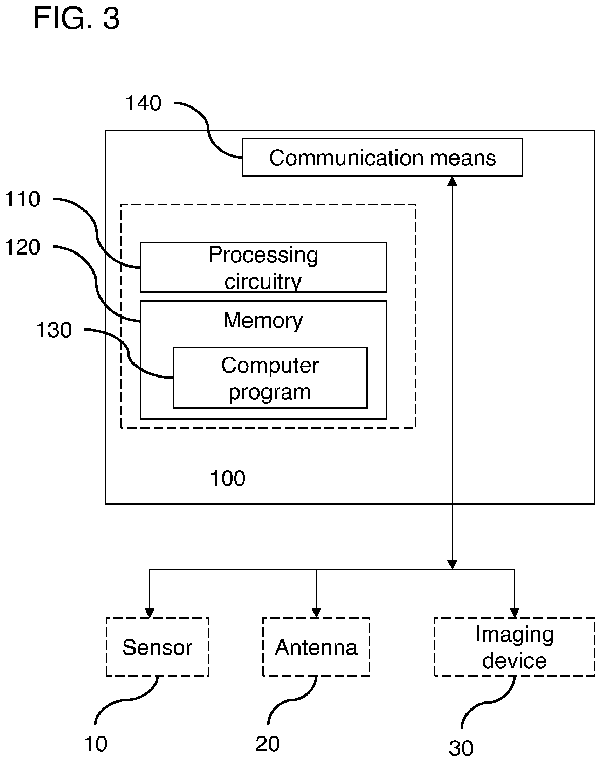

Referring now to Fig. 3, there is shown a schematic illustration of a system 100 for controlling notification of a vehicle status to a user according to the present disclosure. The system 100 comprises processing circuitry 110 and a memory 120, wherein said memory 120 contains instructions executable by said processing circuitry 110. Further, the system 100 is arranged to communicate with at least one sensor 10, antenna 20 and/or imaging device 30 arranged in the vehicle 5 to receive data via suitable communication means 140 as known in the art. The system 100 is configured to carry out the method described above in conjunction with Fig. 2. The system 100 may be incorporated in a vehicle, wherein some of the components or functions may be localised or performed separate from the vehicle 5, e.g., on a remote server (not shown). Further, the system is also arranged to send a vehicle status notification to a mobile device of the user by wireless signal communication, either directly via communication means 140, or via the remote server.

The present disclosure furthermore relates to a computer program 130 comprising instructions which, when the computer program is executed by a computer, cause the computer to carry out the method described above. The computer program 130 may be stored in the memory 120 and the instructions may be executable by the processing circuitry 110. The present disclosure furthermore relates to a computer-readable data carrier having stored thereon the computer program 120. The computer-readable data carrier may be one of an electronic signal, an optical signal, a radio signal, a computer-readable storage medium, or another suitable computer-readable data carrier known to the skilled person.

Although the invention has been illustrated and described in detail in the drawings and foregoing description, such illustration and description are to be considered illustrative or exemplary and the invention is not limited to the disclosed embodiments. For example, the window and emergency release mechanism may be arranged in a building or other structure instead of a vehicle.

Although the invention has been illustrated and described in detail in the drawings and foregoing description, such illustration and description are to be considered illustrative or exemplary and the invention is not limited to the disclosed embodiments.

## Claims

1. A method for controlling notification of a status of a vehicle to a user, comprising:
determining whether the user is inside the vehicle; and
if the user is not inside the vehicle, determining whether the user is within a predetermined threshold distance from the vehicle; wherein
if the user is within the predetermined threshold distance of the vehicle, de-activating a notification of the status of the vehicle to the user; and
if the user is not within the predetermined threshold distance of the vehicle, activating a notification of the status of the vehicle to the user.

2. The method according to claim 1, further comprising:
if the user is not inside the vehicle, capturing at least one image of an environment surrounding the vehicle;
determining a presence of the user in the at least one image; wherein
if the user is present in the at least one image; de-activating a notification of the status of the vehicle to the user; and
if the user is not present in the at least one image; activating a notification of the status of the vehicle to the user.

3. The method according to claim 2, further comprising:
if the user is present in the at least one image, determining whether the user faces towards the vehicle within a predetermined time period; wherein
if the user faces towards the vehicle within a predetermined time period; de-activating a notification of the status of the vehicle to the user; and
if the user does not face towards the vehicle within a predetermined time period; activating a notification of the status of the vehicle to the user.

4. The method according to claim 3 or 4, wherein determining the presence of the user in the at least one image and/or if the user faces towards the vehicle is performed using facial recognition.

5. The method according to claim 3, wherein determining the presence of the user in the at least one image is performed by correlating a position of a person in the at least one image with a position of a key associated with the vehicle.

6. The method according to any one of claims 2-5, wherein the at least one image is captured using at least one imaging device arranged in the vehicle.

7. The method according to any one of the preceding claims, wherein determining whether the user is inside the vehicle is performed by means of a pressure sensor arranged in at least one seat of the vehicle, at least one interior imaging device in the vehicle, and/or at least one sensor or antenna arranged in the vehicle and configured to detect presence of a key associated with the vehicle and/or whether a vehicle door has been opened.

8. The method according to any one of the preceding claims, wherein determining whether the user is within a threshold distance from the vehicle comprises measuring a distance between the vehicle and a key associated with the vehicle based on sensors/antennas arranged in the vehicle, determining a presence of the user in at least one image of the surroundings of the vehicle, wireless signal communication between the vehicle and the key associated with the vehicle and/or geopositioning of the vehicle and the key associated with the vehicle.

9. The method according to claim 8, wherein geopositioning comprises using GNSS positioning, mobile device tracking and/or Wi-Fi positioning.

10. The method according to any one of the preceding claims, wherein the status of the vehicle comprises a door lock status, a lighting system status, and/or a heating system status.

11. The method according to any one of the preceding claims, wherein the notification of the vehicle status to the user comprises sending a signal to at least one mobile device associated with the vehicle.

12. A system for controlling notification of a status of a vehicle to a user, comprising:
processing circuitry; and
a memory, wherein said memory contains instructions executable by said processing circuitry;
wherein the system is arranged to communicate with at least one sensor, antenna and/or imaging device arranged in the vehicle to receive data;
wherein the system is configured to carry out the method according to any one of the preceding claims.

13. A vehicle comprising a system according to claim 12.

14. A computer program comprising instructions which, when the program is executed by a computer, cause the computer to carry out the method according to any one of claims 1-11.

15. A computer-readable data carrier having stored thereon the computer program according to claim 14.
